# EUROPÄISCHE PATENTANMELDUNG

(11) **EP 2 060 833 A1**
(43) Veröffentlichungstag der Anmeldung: **20.05.2009**
(21) Anmeldenummer: 08166691.9
(22) Anmeldetag: 15.10.2008
(51) Int. Cl.: F16J 15/24, F16J 15/26

(54) **Packungsring-Kombination**

(30) Priorität: 15.11.2007 AT 18532007
(71) Anmelder: Hoerbiger Kompressortechnik Holding GmbH, 1220 Wien (AT)
(72) Erfinder: Lindner-Silwester, Tino, 1150 Wien (AT); Hold, Christian, 1170 Wien (AT); Jandl, Alexander, 3495 Rohrendorf (AT)
(74) Vertreter: Weiss, Christian

(57) **Zusammenfassung**

Herkömmliche Kombinationen aus radial und tangential geschnittenen Packungsringen erfordern, insbesondere bei fortschreitendem Verschleiß, eine gewisse elastische Verformung des elastischen Packungsringes, um eine ausreichende Dichtwirkung erzielen zu können. Das erzielbare Verschleißmaß ist dadurch aber limitiert. Andererseits verschleißen Dichtringe, die durch die Schnittführung ein hohes Verschleißmaß und eine hohe Lebensdauer bieten, unkontrolliert, womit die Gefahr der Beschädigung bzw. Zerstörung der Dichtringe verbunden ist, was eine regelmäßige Wartung und Austausch der Dichtringe erfordert. Diese Probleme werden durch eine erfindungsgemäße Packungsring-Kombination aus mehrteiligen Dichtring 12 und Anschlagring 20 vermieden, indem an den Dichtsegmenten 14 des Dichtringes 12 eine axiale Schulter 16 vorgesehen wird, die in axialer Richtung den Anschlagring 20 zumindest teilweise überdeckt und die axiale Schulter 16 in radialer Richtung beabstandet vom Anschlagring 20 angeordnet ist, sodass sich die axiale Schulter 16 ab einem bestimmten Verschleiß der Dichtsegmente 14 am Anschlagring 20 abstützt, womit ein Verschleißstopp bzw. eine Verschleißverzögerung erreicht wird.

## Beschreibung

Die gegenständliche Erfindung betrifft eine Packungsring-Kombination mit einem Dichtring, bestehend aus einer Anzahl von Dicht- und Stützsegmenten, wobei die Dicht- und Stützsegmente zur Ausbildung eines Ringes in Umfangsrichtung abwechselnd nebeneinander angeordnet sind, und mit einem Anschlagring, der axial am Dichtring anliegt, sowie eine Druckpackung und eine Abdichtung mit einer solchen Packungsring-Kombination.

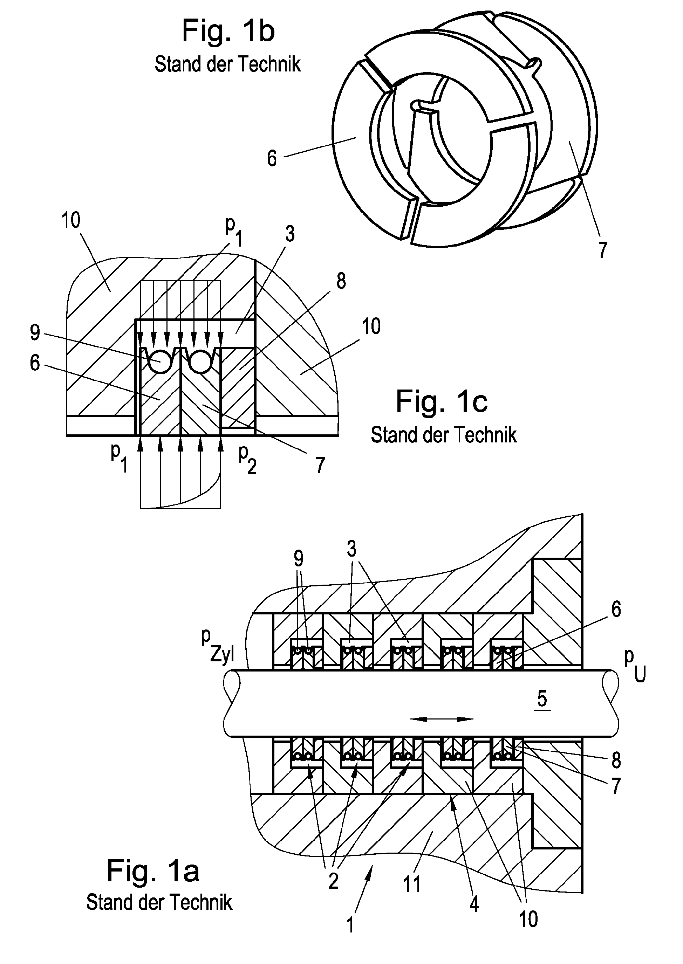

Kolbenkompressoren, vor allem in doppeltwirkender Bauweise, erfordern eine Abdichtung des kurbelseitigen Kompressionsraumes im Zylinder, in dem der zeitlich veränderliche (hohe) Zylinderdruck p_{zyl} herrscht, entlang der oszillierenden Kolbenstange 5. Diese Abdichtung hat typischerweise gegen den im Kurbelkasten herrschenden (niedrigen) Umgebungsdruck pᵤ zu erfolgen. Die Dichtelemente, die in einer solchen Abdichtung 4 zum Einsatz kommen, werden Packungsringe 6, 7 genannt und sind in einer sogenannten Druckpackung 2, in der Regel bestehend aus einer Anzahl von Packungsringen 6, 7, angeordnet, wie beispielhaft in herkömmlicher Ausführung in Fig. 1 dargestellt. Die Dichtelemente können dabei unvermeidlichen Lateralbewegungen der Kolbenstange 5 folgen, ohne ihre Dichtwirkung zu verlieren. Zur Erhöhung der Lebensdauer und Zuverlässigkeit einer Druckpackung 2 werden in einer Druckpackung 2 mehrere solcher Packungsringe 6, 7 in Serie geschaltet. In einer Abdichtung 4 werden in der Regel mehrer Druckpackungen 2 hintereinander angereiht. Solche Druckpackungen 2 bzw. Abdichtungen 4 sind aus dem Stand der Technik in unterschiedlichsten Ausgestaltungen hinlänglich bekannt, z.B. aus der GB 928 749 A oder der US 1 008 655 A.

Packungsringe 6, 7 sind selbstaktivierende Dichtungen, die für eine ausreichende Dichtwirkung, also eine hinreichend kleine Leckage, in der Regel eine gewisse abzudichtende Druckdifferenz p₁ - p₂ benötigen (Fig. 1c). Der Gasdruck in einer Packungskammer 3 baut sich in den abzudichtenden Spalten eines Packungsringes 6, 7 vom höheren Niveau p₁ auf das niedrigere Niveau p₂ in der nächsten Packungskammer 3 ab. Fig. 1c zeigt schematisch diesen Druckabbau im zwischen Packungsring 6, 7 und Kolbenstange 5 gebildeten Dichtspalt. Diesem Dichtspalt kommt eine wesentliche Rolle im Hinblick auf die Leistungsfähigkeit der Packungsringe 6, 7 zu, da die Relativbewegung der Kontaktflächen zwischen Kolbenstange 5 und Ringen 6, 7 einen Verschleiß der Packungsringe 6, 7 hervorruft. Dieser Ringverschleiß erfordert in der Regel geschnittene Ringformen, die ein selbsttätiges kontinuierliches Nachstellen des Ringes bei Materialabtrag an diesem Dichtspalt Ring/Kolbenstange ermöglichen. Industriestandard sind dabei radial und tangential geschnittene Ringe 6, 7, welche paarweise in Packungskammern der Druckpackung eingesetzt werden, um die auftretenden Stoßspalte zur Verschleißkompensation gegenseitig abzudecken, wie in Fig. 1 b schematisch dargestellt. Solche radial/tangential geschnittenen Ringkombinationen sind einfachwirkende Dichtungen, welche nur in Richtung des Kreuzkopfes abdichten, während im Laufe der kurbelseitigen Reexpansionsphase des Kolbenkompressors 1 die radialen Schnitte sicherstellen, dass kein höherer Druck in der Packung eingeschlossen werden kann. Bei geschnittenen Ringformen kommen bekanntermaßen üblicherweise über den Außenumfang gewickelte Schlauchfedern (Umfangfedern) 9 zum Einsatz, welche die Packungsringe 6, 7 auch im drucklosen Zustand an die Kolbenstange 5 pressen.

Speziell bei höheren Drücken kann bei herkömmlichen Anordnungen auch eine nennenswerte Extrusion der Packungsringe 6, 7 in den zwischen Kolbenstange 5 und Packungsgehäuse bzw. Kammerscheibe 10 gebildeten Spalt auftreten. Zur weitmöglichsten Vermeidung dieser Extrusion können zwischen dem Ring auf der niedrigen Druckseite und der Kammerscheibe 10 zusätzliche metallische, die Kolbenstange 5 nicht flächig berührende Stützringe 8 verwendet werden, wie z.B. in der US 3 305 241 A offenbart.

Bei einer Kombination eines radial und eines tangential geschnittenen Packungsringes erfolgt die Abdichtung zur Kolbenstange hin im Wesentlichen nur durch den tangential geschnittenen Packungsring, dessen Ringsegmente sich durch die tangentiale Schnittführung bei Verschleiß zusammenschieben können und somit die Dichtwirkung beibehalten. Der radial geschnittene Packungsring dient im Wesentlichen nur dazu, die Verschleißspalte des tangentialen Packungsringes in axialer und radialer Richtung abzudichten und unterliegt nur in der Einlaufphase einem geringen Verschleiß. Der radiale Packungsring verschleißt dabei nur so weit bis die Ringsegmente in Umfangsrichtung aneinander liegen. Die radial und tangential geschnittenen Packungsringe verschleißen somit unterschiedlich. Neben dem Umstand, dass der tangential geschnittene Ring wegen der größeren Flächenpressung stets rascher verschleißt als der radial geschnittene, weist der tangentiale Ring typischerweise auch einen ungleichmäßigen Verschleiß in Umfangsrichtung auf, womit ein Öffnen der Tangentialschnitte und damit eine signifikant erhöhte Leckage einhergehen können. Damit kann ein solcher Ring, auch wenn er noch nicht an seinem Verschleißstopp (gegeben durch Verschleißkompensationsspalt) angelangt ist, seine Dichtwirkung zum größten Teil verlieren. Darüber hinaus benötigt eine Packungsring-Kombination aus radial und tangential geschnittenem Packungsring bei zunehmendem Verschleiß elastische Deformationen der Ringsegmente, um die Dichtwirkung aufrecht erhalten zu können. Damit kommen als Werkstoff für solche Packungsring-Kombinationen nur solche in Frage, die entsprechende elastische Deformationen zulassen.

In der JP 05-044850 A1 wurde bereits vorgeschlagen, einen sechsteiligen Dichtring zu verwenden, der drei Dichtsegmente aufweist, die radial innen eine durchgehende Dichtfläche ausbilden. Die Dichtsegmente liegen an dazwischen angeordneten keilförmigen Stützsegmenten an. Bei Verschleiß der Dichtsegmente bewegen sich die Dichtsegmente radial nach innen und gleiten dabei entlang der Stützsegmente, die im Wesentlichen an derselben Position bleiben. Ein solcher Dichtring kann somit einem sehr großen Verschleiß unterliegen, ohne seine Dichtwirkung zu verlieren. Das Problem dabei ist jedoch, dass der Dichtring rechtzeitig gewechselt werden muss, bevor die Dichtsegmente zu weit verschleißen und dadurch möglicherweise durch die mechanische und/oder thermische Belastung beschädigt oder sogar zerstört werden. Da der tatsächliche Verschleiß von außen jedoch nicht erkannt werden kann, muss die Abdichtung regelmäßig überprüft werden, was meistens auch mit einem (verfrühten) Austausch der Dichtringe einhergeht. Die Lebensdauer der Dichtringe wird daher möglicherweise nicht optimal ausgenutzt.

Es ist folglich eine Aufgabe der gegenständlichen Erfindung, die oben angeführten Probleme zu beheben, insbesondere einen Dichtring anzugeben, der trotzdem einem sehr großem Verschleiß unterworfen werden kann und das verfügbare Verschleißpotential optimal ausnutzen kann.

Diese Aufgabe wird erfindungsgemäß dadurch gelöst, dass an den Dichtsegmenten des Dichtringes eine axiale Schulter vorgesehen ist, die in axialer Richtung den Anschlagring zumindest teilweise überdeckt und die axiale Schulter in radialer Richtung beabstandet vom Anschlagring angeordnet ist, sodass sich die axiale Schulter ab einem bestimmten Verschleiß der Dichtsegmente am Anschlagring abstützt. Mit zunehmendem Verschleiß des Dichtringes wandern die Dichtsegmente radial nach innen, wobei durch die radiale Beabstandung eine Einlaufphase mit ungehindertem Verschleiß ermöglicht wird. Das Beibehalten der Dichtwirkung beruht bei der erfindungsgemäßen Ausführung darauf, dass mit zunehmendem Verschleiß keinerlei elastische Deformationen wie bei herkömmlichen radial/tangential geschnittenen Ringen nötig sind und damit ein Aufreißen von Leckagespalten bzw. -pfade verhindert werden kann. Dadurch, dass das Aufrechterhalten der Dichtwirkung sich auf keinerlei elastische Deformationen stützt, eignet sich dieses Design ganz besonders auch für Hochleistungskunststoffe wie beispielsweise Polyimid, welches beste Reibungs- und Verschleißeigenschaften bei hoher mechanischer Festigkeit und Steifigkeit sowie Temperaturbeständigkeit in sich vereint. Die erfindungsgemäße Ausführung des Dichtringes ist darüber hinaus außergewöhnlich unempfindlich gegenüber Maßabweichungen bei der Fertigung. Abweichungen der Breiten der einzelnen Segmente untereinander, führen nur zu kleinen Radialverschiebungen der Dicht- bzw. Stützsegmente und das einzige wesentliche Maß zur Aufrechterhaltung einer hohen Dichtwirkung stellt die Dicke der Segmente in axialer Richtung dar, welche leicht mit hoher Genauigkeit zu fertigen ist. Die Dichtsegmente können somit in einem sehr großen Bereich verschleißen. Gleichzeitig ist durch die axiale Schulter in Zusammenwirken mit dem Anschlagring sichergestellt, dass ein Verschleißstopp vorhanden ist, der einen weiteren Verschleiß über ein kritisches Maß hinaus unterbindet. Die Dichtwirkung bleibt dabei in ausreichenden Maßen aufrecht.

Ganz besonders vorteilhaft ist es dabei, wenn die beiden in Umfangsrichtung gesehenen Stirnflächen eines Dichtsegments parallel zueinander angeordnet sind. Durch eine solche Schnittführung ergibt sich eine Kinematik, bei der die Stützsegmente in vorteilhafter Ausführung ihre Lage beibehalten, während die Dichtsegmente radial nach innen wandern. Damit kann sichergestellt werden, dass immer nur die Dichtsegmente am abzudichtenden Bauteil anliegen und folglich nur die Dichtsegmente verschleißen. Bei Dichtsegmenten mit parallelen Stirnflächen ist es weiters vorteilhaft, eine gegebenenfalls vorhandene Verdrehsicherung in einem Stützsegment anzuordnen, da diese in Position bleiben und die Verdrehsicherung somit im Wesentlichen keiner Scherbeanspruchung unterliegt.

Besonders vorteilhaft ist es, wenn die beiden in Umfangsrichtung gesehenen Stirnflächen eines Dichtsegments radial innen abgeschrägt sind, da damit die Dichtsegmente unempfindlicher gegen Beschädigung während des Transports oder Einbaus werden. Außerdem kann dadurch der Einbau des Dichtringes in ein Packungsgehäuse erleichtert werden.

Vorteilhaft wird ein radial geschnittener Packungsring vorgesehen, der an der dem hohen Druck zugewandten axialen Stirnfläche des Dichtringes axial am Dichtring anliegt. Die Besonderheit dieses Konzeptes besteht darin, dass der Dichtring, der aufgrund des geringeren Gasdrucks im Dichtspalt mit einer größeren Kraft als der radial geschnittene Packungsring gegen den abzudichtenden Bauteil gedrückt wird und somit auch einem größeren Verschleiß unterliegt, einen großen Materialabtrag an seinem Innendurchmesser erleiden kann, ohne seine Dichtwirkung zu verlieren. Durch diesen erzwungenen symmetrischen Verschleiß der Dichtsegmente wird das Dichtringmaterial optimal ausgenützt und bei gegebener Verschleißrate eine größtmögliche Lebensdauer erzielt, während andererseits eine Verlängerung der Lebensdauer des Dichtringes durch einfache Erhöhung der radialen Höhe der Dichtsegmente zu erzielen ist.

In einer vorteilhaften Ausgestaltung wird die axiale Schulter auf der dem niedrigen Druck zugewandten Seite des Dichtringes vorgesehen. Dabei kann der Anschlagring entweder starr oder elastisch sein. Der Anschlagring kann dazu als ein starrer Stützring, der niederdruckseitig axial am Dichtring anliegt und der zumindest teilweise von der axialen Schulter umgeben ist, oder als ein elastischer Ring, der niederdruckseitig axial am Dichtring anliegt und der zumindest teilweise von der axialen Schulter umgeben ist, ausgeführt sein. Bei Verwendung eines starren Stützringes kann radial zwischen axialer Schulter und Stützring auch ein elastischer Ring angeordnet werden. Bei Verwendung einer starren Anschlageinrichtung ergibt sich ein definierter Verschleißstopp, bei dem ein weiterer Verschleiß nur mehr über eine elastische Verformung der Dichtsegmente möglich ist. Bei Verwendung einer elastischen Anschlageinrichtung kann eine Verschleißverzögerung eingestellt werden, sodass sich die Verschleißrate graduell reduziert. Bei einer hohen Anforderung an die Dichtheit wird es vorteilhafter sein, eine Verschleißverzögerung vorzusehen, bei geringeren Anforderungen an die Dichtheit kann ein Verschleißstopp ausreichend sein. Beiden Varianten ist die lange Lebensdauer durch den großen verfügbaren Verschleißbereich gemein.

Alternativ kann die axiale Schulter auch auf der dem hohen Druck zugewandten Seite des Dichtringes vorgesehen ist. Der Anschlagring kann dann vorteilhaft der radial geschnittene Packungsring selbst oder ein hochruckseitiger starrer Stützring, der axial am Dichtring anliegt, sein. Die Verwendung des radial geschnittenen Packungsringes als Anschlageinrichtung ist dabei ganz besonders vorteilhaft, da dann der Dichtring und der vorgeschaltete, radial geschnittene Packungsring ab einem gewissen, beliebig einstellbaren Radialverschleiß des Dichtringes mit gleicher Rate verschleißen. Die Problematik des stets schneller verschleißenden Dichtringes gegenüber dem vorgeschalteten radial geschnittenen Packungsringes wird somit beseitigt und das zur Verfügung stehende Ringmaterial optimal zum Verschleiß genutzt. Auch damit kann folglich eine Verschleißverzögerung erreicht werden.

Die gegenständliche Erfindung wird nachfolgend anhand der schematischen, beispielhaften und nicht einschränkenden und vorteilhafte Ausgestaltungen zeigenden Figuren 1 bis 9 beschrieben. Dabei zeigt
Fig. 1 eine bekannte Abdichtung einer Kolbenstange mit radial und tangential geschnittenen Packungsringen,
Figuren 2 und 3 eine vorteilhafte Ausgestaltung einer Packungsring-Kombination bzw. einer Druckpackung,
Figuren 4 und 5 vorteilhafte Ausgestaltungen eines Dichtrings einer erfindungsgemäßen Packungsring-Kombination mit abgeschrägten Kanten und
Figuren 6 bis 9 weitere vorteilhafte Ausgestaltungen einer Packungsring-Kombination bzw. einer Druckpackung.

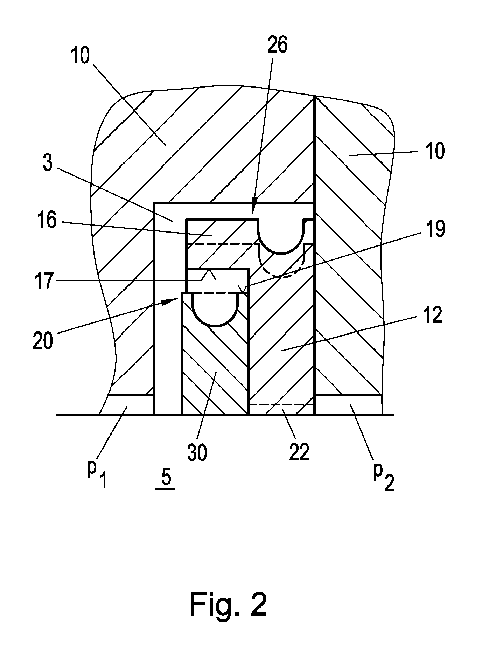

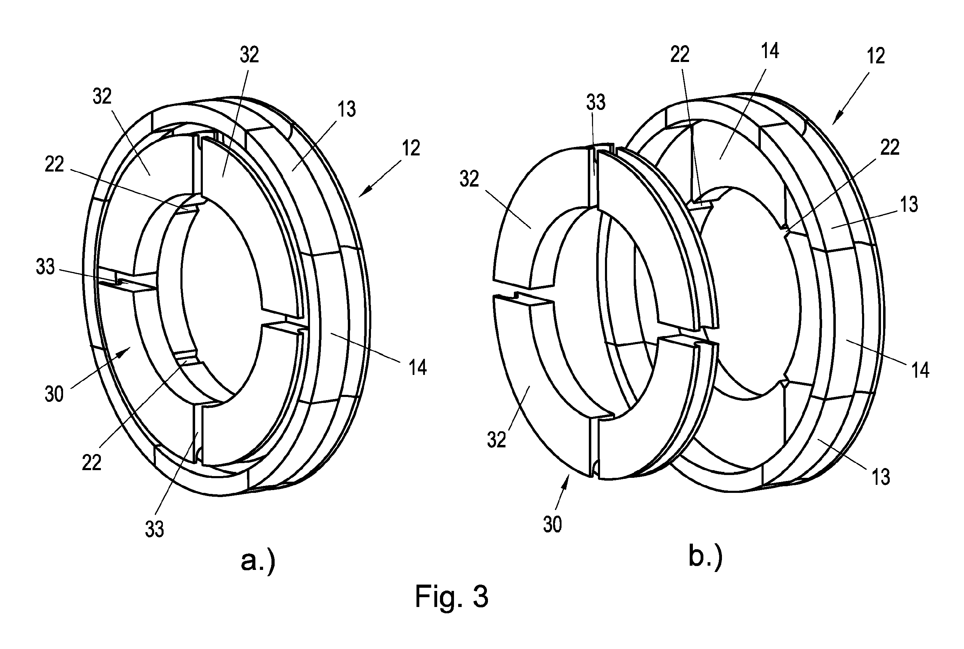

Unter Bezugnahme auf die Figuren 2 und 3 wird eine Ausgestaltung einer erfindungsgemäßen Packungsring-Kombination einer Druckpackung 26, z.B. einer Abdichtung einer Kolbenstange 5 eines Kompressors, beschrieben. Die Druckpackung 26 ist dabei in einer Packungskammer 3 eines Packungsgehäuses (z.B. gebildet durch benachbarte Kammerscheiben 10) angeordnet und dichtet dabei zwischen einer Seite mit einem hohen Druck p₁ und einer Seite mit einem niedrigen Druck p₂ ab. Abdichten heißt in diesem Zusammenhang, dass der hohe Druck p₁ durch die Druckpackung 26 bzw. die Packungsring-Kombination auf den niedrigen Druck p₂ abgebaut wird. Die Packungsring-Kombination besteht aus einem Dichtring 12, der in diesem Beispiel achtteilig ausgeführt ist, und einem Anschlagring 20. Der Dichtring 12 weist, hier im radial äußeren Bereich des Dichtringes 12 und der Seite mit dem hohem Druck p₁ zugewandt, eine axiale Schulter 16 auf. Diese axiale Schulter 16 kann dabei nur an den Dichtsegmenten 14 oder sowohl an den Dichtsegmenten 14 und den Stützsegmenten 13 angeordnet sein. Der Dichtring 12 liegt mit der gegenüberliegenden niederdruckseitigen axialen Stirnfläche an der Wand des Packungsgehäuses 10 an und dichtet somit in radialer Richtung gegen den in der Packungskammer 3 wirkenden hohen Druck p₁. Der Anschlagring 20 ist in diesem Beispiel als radial geschnittener Packungsring 30 ausgeführt und liegt hochdruckseitig axial am Dichtring 12 an. Die axiale Schulter 16 des Dichtringes 12 überdeckt dabei den Anschlagring 20 in axialer Richtung zumindest teilweise. Die innere Umfangsfläche 17 der axialen Schulter 16 und die äußere Umfangsfläche 19 des Anschlagringes 20 sind dabei in radialer Richtung beabstandet voneinander angeordnet, wobei der Anschlagring 20 bezüglich der Umfangsfläche 17 der axialen Schulter 16 radial innen angeordnet ist. Der Anschlagring 20 könnte aber anstelle eines radial geschnittenen Packungsringes 30 auch durch einen starren Stützring realisiert werden, der hochdruckseitig axial am Dichtring 12 anliegt. Die axiale Schulter 16 des Dichtringes 12 würde dann nach einem gewissen Verschleiß an der äußeren Umfangsfläche des Stützringes zu liegen kommen.

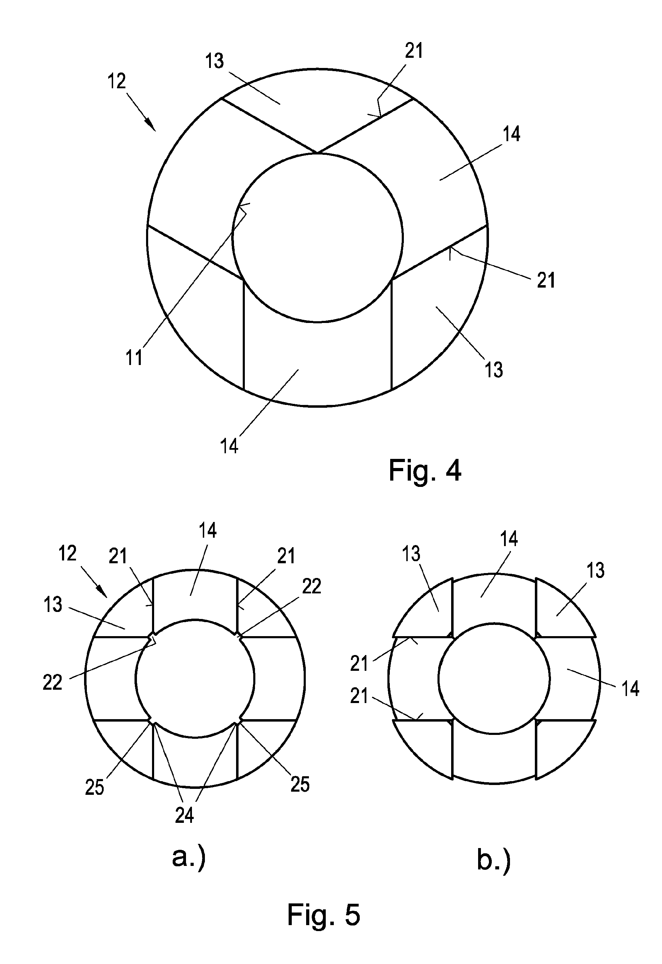

Ein sechsteiliger Dichtring 12 ist in Fig. 4 dargestellt und umfasst in diesem Ausführungsbeispiel je drei Dichtsegmente 14 und Stützsegmente 13, die in Umfangsrichtung gesehen abwechselnd aneinander liegend angeordnet sind und einen Ring ausbilden. Radial innen entsteht eine durchgehende kreisrunde Umfangsfläche 11, die gleichzeitig die Dichtfläche zum abzudichtenden Bauteil, hier z.B. die Kolbenstange 5, bildet. Entlang dieser Dichtfläche wird der hohe Druck p₁ auf den niedrigen Druck p₂ abgebaut. An der radial äußeren Umfangsfläche des Dichtringes 12, bzw. der Dichtsegmente 14 und der Stützelemente 13, kann in bekannter Weise eine Ausnehmung zur Aufnahme einer Umfangsfeder 9 vorgesehen sein.

Die beiden in Umfangsrichtung gesehenen Stirnflächen 21 der Dichtsegmente 14 sind dabei bevorzugt parallel zueinander. Bei Verschleiß der Dichtsegmente 14, wodurch die Dichtsegmente 14 durch den radial außen wirkenden hohen Druck p₁ radial nach innen zugestellt werden, bleiben dadurch die Stützelemente 13 im Wesentlichen in Position und die Dichtsegmente 14 gleiten entlang der Stützsegmente 13 radial nach innen. Damit verschleißen nur die Dichtsegmente 14. Selbstverständlich können die beiden Stirnflächen eines Dichtsegmentes 14 auch einen Winkel zueinander aufweisen. Bei einer solchen Anordnung können durch den Verschleiß der Dichtsegmente 14 aber auch die Stützsegmente 13 in radialer Richtung bewegt werden. Deshalb ist in einer solchen Ausführung dafür Sorge zu tragen, z.B. durch konstruktive Gestaltung der Stützsegmente 13, dass die innere Umfangsfläche 11 geschlossen bleibt, um die Dichtwirkung des Dichtringes 12 aufrechterhalten zu können.

Um Beschädigung der dichtflächenseitigen Kanten der Dichtsegmente 14, z.B. beim Einbau oder beim Transport, zu vermeiden, kann vorgesehen sein, die in Umfangsrichtung gesehenen Stirnflächen 21 der Dichtsegmente 14 radial innen abzuschrägen, z.B. durch einen radialen Schnitt 24, wie in Fig. 5 anhand eines achtteiligen Dichtringes 12 dargestellt. Ebenso können die Stützsegmente 13 radial innen abgeschrägt sein, z.B. durch einen tangentialen Schnitt 25. Beim Einbau des Dichtringes 12 werden die Dichtsegmente 14 durch die Umfangsfeder 9 auf einen vorgegebenen Innendurchmesser, der durch die Abschrägung der Dichtsegmente 14 definiert wird, zusammengedrückt und liegen an den Abschrägungen aneinander an, womit eine definierte Einbausituation erzielt wird.

Durch die Abschrägungen entsteht jedoch ein axialer Spalt 22, der die Dichtwirkung des Dichtringes 12 zerstören würde. Es ist somit in einer solchen Ausgestaltung eine Abdichtung dieser axialen Spalte 22 notwendig. Erfindungsgemäß kann dazu auf der Seite des hohen Drucks p₁ zur Abdichtung dieses Spaltes 22 ein radial geschnittener Packungsring 30 angeordnet werden, der axial am Dichtring 12 anliegt. Eine solche vorteilhafte Anordnung ist in den Figuren 2 und 3 dargestellt und nachfolgend beschrieben.

Der radial geschnittene Packungsring 30, hier gleichzeitig der Anschlagring 20, ist dabei in der durch die axiale Schulter 16 gebildeten axialen Ausnehmung angeordnet und liegt axial am Dichtring 12 an. Der radial geschnittene Packungsring 30 wird somit in Umfangsrichtung von der axialen Schulter 16 zumindest teilweise umschlossen. Mit fortlaufendem Verschleiß der Dichtsegmente 14 wandern diese radial nach innen und die Umfangsfläche 17 der axialen Schulter 16 nähert sich dem Anschlagring 20 und stützt sich schließlich auf diesem ab (in Fig. 2 strichliert angedeutet). Da der hohe Druck p₁ radial außen am Dichtring 12 anliegt wird nun auch der radial geschnittene Packungsring 30, der dazu vorteilhaft zumindest dreiteilig ausgeführt ist, durch den Dichtring 12 mitgenommen und zusammen mit dem Dichtring 12 an den abzudichtenden Bauteil gepresst und verschleißt somit gemeinsam mit dem Dichtring 12. Aufgrund der nun deutlichen vergrößerten Anpressfläche verlangsamt sich aber dadurch die Verschleißrate erheblich, womit eine Verschleißverzögerung erzielt werden kann. Damit kann die sichere Funktion der Dichtung, zumindest für einen gewissen Zeitraum, auch dann noch gewährleistet werden, wenn der Anschlag bereits erreicht wurde.

Der radial geschnittene Packungsring 30, in Fig. 3 ein Packungsring 30 mit vier Packungsringsegmenten 32, ist dabei so anzuordnen, dass die zwischen den Packungsringsegmenten 32 entstehenden radialen Spalten 33 versetzt zu den axialen Spalten 22 des Dichtringes 12 sind, um diese abzudichten, wie in Fig. 3 dargestellt. Zwischen radial geschnittenem Packungsring 30 und Dichtring 12 wird weiters vorteilhaft eine Verdrehsicherung vorgesehen, um den Versatz aufrecht zu erhalten. Die Verdrehsicherung kann ein einfacher Stift sein, der in fluchtende Ausnehmungen am Dichtring 12 und am Anschlagring 20 gepresst wird. Es ist aber auch jede andere geeignete Verdrehsicherung denkbar. In einer Ausführung mit parallelen Stirnflächen 21, bei der die Stützsegmente 13 ihre Position beibehalten, wird eine allfällige Verdrehsicherung zwischen Dichtring 12 und Anschlagring 20 besonders vorteilhaft an einem der Stützsegmente 13 angeordnet, da die Verdrehsicherung in diesem Fall bei Verschleiß der Dichtsegmente 14 im Wesentlichen keiner Scherbeanspruchung unterliegt und somit die Gefahr des Bruches der Verdrehsicherung gering ist.

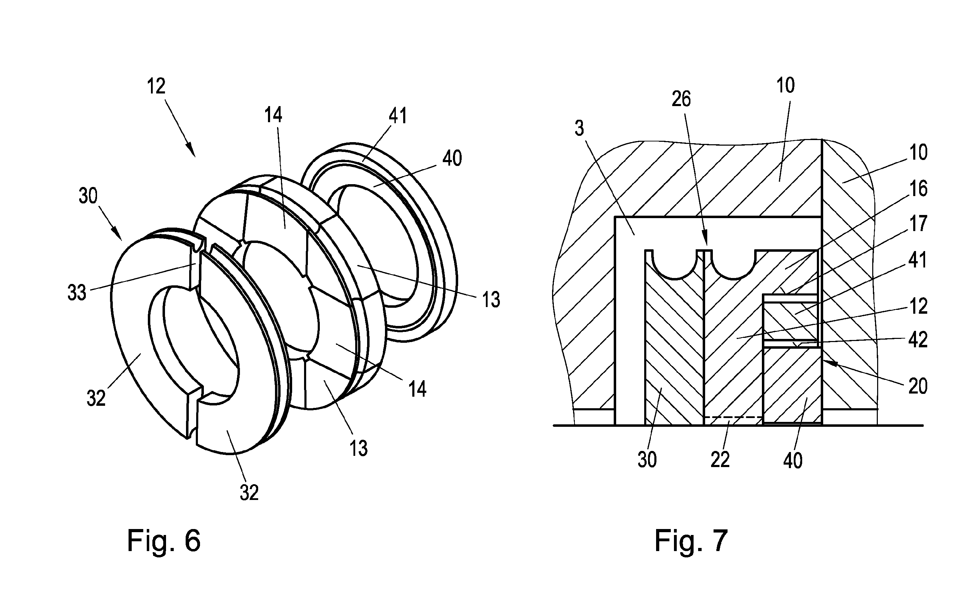

Eine weitere vorteilhafte Ausgestaltung der Erfindung ist in den Figuren 6 und 7 dargestellt. Hier befindet sich die axiale Schulter 16 des Dichtringes 12 auf der Seite des niedrigen Drucks p₂. Am Dichtring 12 liegt hier auf der Seite des niedrigen Drucks p₂ als Anschlagring 20 axial ein starrer ungeschnittener Stützring 40 an. Der Stützring 40 ist dabei zwischen dem Dichtring 12 und einer Wand des Packungsgehäuses 10 angeordnet und übernimmt die radiale Abdichtung des Dichtringes 12 gegen den in der Packungskammer 3 wirkenden hohen Druck p₁. Der Stützring 40 ist dabei bevorzugt breiter als die Länge der axialen Schulter 16, wie in Fig. 7 angedeutet, um eine fertigungstechnisch ungünstige Doppelpassung zu vermeiden. An der niederdruckseitigen Stirnseite des Dichtringes 12 ist weiters ein elastischer Ring 41 angeordnet, der radial zwischen Stützring 40 und axialer Schulter 16 angeordnet ist. Dieser elastische Ring 41 ist bevorzugt radial beabstandet von der inneren Umfangsfläche 17 der axialen Schulter 16 angeordnet und kann auch radial beabstandet von der äußeren Umfangsfläche 42 des Stützringes 40 angeordnet sein. Wenn die axiale Schulter 16 den elastischen Ring 41 erreicht, wird durch weiteren Verschleiß der elastische Ring 41 zusammengedrückt, was die Verschleißrate verlangsamt. Mit fortlaufendem Verschleiß liegt der elastische Ring 41 irgendwann auch am Stützring 40 auf, was die Verschleißrate weiter verzögert. Die Verschleißrate kann somit graduell reduziert werden, bis kein weiterer Verschleiß mehr möglich ist. Die Verschleißverzögerung, gegeben durch die radiale Nachgiebigkeit des elastischen Ringes 41, kann dabei durch die radiale Höhe und/oder das verwendete Material des elastischen Ringes 41 eingestellt werden. Es ist aber auch denkbar, dass der elastische Ring 41 von Anfang an an der axialen Schulter 16 anliegt, womit die Verschleißverzögerung von Anfang an auftritt.

Ein solcher elastischer Ring 41 kann natürlich auch ohne zusätzlichen Stützring 40 verwendet werden und bildet in diesem Fall gleichzeitig den Anschlagring 20 aus. In diesem Fall liegt bevorzugt der Dichtring 12 zur radialen Abdichtung an der Wand des Packungsgehäuses 10 an und der elastische Ring 41 ist radial beabstandet von der axialen Schulter 16.

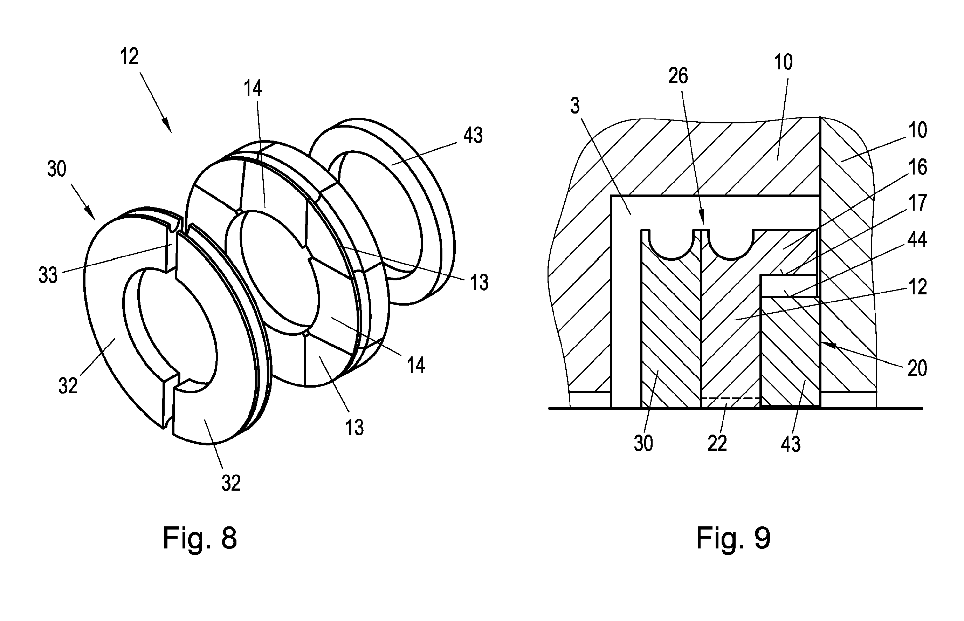

In einer weiteren vorteilhaften Ausgestaltung der Erfindung ist nur ein starrer Stützring 43 vorgesehen, wie in den Figuren 8 und 9 dargestellt. Nachdem die axiale Schulter 16 durch den Verschleiß an der äußeren Umfangsfläche 44 des Stützringes 43 anliegt, ist ein weiterer Verschleiß des Dichtringes 12 nur mehr über eine elastische Verformung des Dichtringes 12 möglich, womit ein einfacher Verschleißstopp realisiert ist.

Die Verwendung eines radial geschnittenen Packungsringes 30, wie in den Figuren 2 und 3 und 6 bis 9 beschrieben, ist aber nicht nur auf Ausgestaltungen mit axialen Spalten 22 zwischen den Dichtsegmenten 14 des Dichtringes 12 beschränkt. Auch in einer Ausführung des Dichtringes 12 gemäß der Fig. 4 kann ein solcher radial geschnittener Packungsring 30 in den verschiedenen Anordnungen verwendet werden, insbesondere und besonders vorteilhaft in Verbindung mit einer der Hochdruckseite zugewandten axialen Schulte 16 wie in den Figuren 2 und 3 beschrieben. In diesem Fall könnte anstelle des radial geschnittenen Packungsringes 30 auch ein hochdruckseitiger starrer Stützring als Anschlagring 20 vorgesehen sein.

Die axiale Schulter 16 des Dichtringes 12 muss natürlich nicht im radial äußeren Bereich des Dichtringes 12 angeordnet sein, sondern kann z.B. auch im mittleren oder im radial inneren Bereich angeordnet sein, solange diese zu Beginn radial beabstandet vom Anschlagring 20 angeordnet ist. Die radiale Beabstandung dient, vor allem in Zusammenhang mit einer Verschleißverzögerung, im Wesentlichen dazu, eine Einlaufphase zu ermöglichen, während der die Dichtsegmente 14 ungehindert verschleißen können und sich so dem abzudichtenden Bauteil anpassen können. Die radiale Beabstandung kann dabei bevorzugt zwischen 0,5mm und 2mm liegen.

Der erfindungsgemäße Dichtring 12, gegebenenfalls in Kombination mit einem radial geschnittenen Packungsring 30 und/oder mit einem Stützring 40, 43 und/oder einem elastischen Ring 41, wird bevorzugt in einer Druckpackung 26 eingesetzt. Dabei können auch mehrere solche Druckpackungen 26 zur Ausbildung einer Abdichtung 4 axial hintereinander angeordnet sein, z.B. wie in Fig.1 dargestellt. Es ist aber auch denkbar, in verschiedenen Druckpackungen der Abdichtung 4 verschiedene Packungsring bzw. Packungsringkombinationen einzusetzen, z.B. in den ersten Druckpackungen 26 eine erfindungsgemäße Anordnung (z.B. nach den Figuren 2, 3 bzw. 6 bis 9) und in den folgenden eine herkömmliche Druckpackung 2 mit radial und tangential geschnittenen Packungsringen (z.B. nach Fig.1).

## Patentansprüche

1. Packungsring-Kombination mit einem Dichtring (12), bestehend aus einer Anzahl von Dichtsegmenten (14) und Stützsegmenten (13), wobei die Dicht- und Stützsegmente (14, 13) zur Ausbildung eines Ringes in Umfangsrichtung abwechselnd nebeneinander angeordnet sind, und mit einem Anschlagring (20), der axial am Dichtring (12) anliegt, **dadurch gekennzeichnet, dass** an den Dichtsegmenten (14) des Dichtringes (12) eine axiale Schulter (16) vorgesehen ist, die in axialer Richtung den Anschlagring (20) zumindest teilweise überdeckt und die axiale Schulter (16) in radialer Richtung beabstandet vom Anschlagring (20) angeordnet ist, sodass sich die axiale Schulter (16) ab einem bestimmten Verschleiß der Dichtsegmente (14) am Anschlagring (20) abstützt.

2. Packungsring-Kombination nach Anspruch 1, **dadurch gekennzeichnet, dass** die beiden in Umfangsrichtung gesehenen Stirnflächen (21) eines Dichtsegments (14) parallel zueinander angeordnet sind.

3. Packungsring-Kombination nach Anspruch 2, **dadurch gekennzeichnet, dass** zwischen Dichtring (12) und Anschlagring (20) eine Verdrehsicherung vorgesehen ist, wobei die Verdrehsicherung am Dichtring (12) an einem Stützsegment (13) angeordnet ist.

4. Packungsring-Kombination nach einem der Ansprüch 1 bis 3, **dadurch gekennzeichnet, dass** die beiden in Umfangsrichtung gesehenen Stirnflächen (21) eines Dichtsegments (14) radial innen abgeschrägt sind.

5. Packungsring-Kombination nach einem der Ansprüche 1 bis 4, **dadurch gekennzeichnet, dass** ein radial geschnittener Packungsring (30) vorgesehen ist, der axial am Dichtring (12) anliegt.

6. Packungsring-Kombination nach Anspruch 5, **dadurch gekennzeichnet, dass** der radial geschnittene Packungsring (30) gleichzeitig der Anschlagring (20) ist.

7. Packungsring-Kombination nach einem der Ansprüche 1 bis 5, **dadurch gekennzeichnet, dass** als Anschlagring (20) ein starrer Stützring (40, 43) vorgesehen ist.

8. Packungsring-Kombination nach Anspruch 7, **dadurch gekennzeichnet, dass** radial zwischen axialer Schulter (16) und Stützring (40) ein elastischer Ring (41) angeordnet ist.

9. Packungsring-Kombination nach einem der Ansprüche 1 bis 5, **dadurch gekennzeichnet, dass** als Anschlagring (20) ein elastischer Ring vorgesehen ist.

10. Packungsring-Kombination nach einem der Ansprüche 1 bis 9, **dadurch gekennzeichnet, dass** an den Stützsegmenten (13) eine axiale Schulter vorgesehen ist, sodass sich zusammen mit den axialen Schultern (16) der Dichtsegmente (14) eine in Umfangsrichtung geschlossene axiale Schulter ergibt.

11. Druckpackung bestehend aus einer Packungsring-Kombination nach einem der Ansprüche 1 bis 10, die in einer Packungskammer (3) eines Packungsgehäuses angeordnet ist, wobei die Packungsring-Kombination zwischen einer Seite mit einem hohen Druck (p₁) und einer Seite mit einem niedrigen Druck (p₂) abdichtet.

12. Druckpackung nach Anspruch 11, **dadurch gekennzeichnet, dass** der radial geschnittene Packungsring (30) auf der Seite des hohen Druckes (p₁) axial am Dichtring (12) anliegt.

13. Druckpackung nach Anspruch 11 oder 12, **dadurch gekennzeichnet, dass** die axiale Schulter (16) an der dem niedrigen Druck (p₂) zugewandten Seite des Dichtringes (12) vorgesehen ist.

14. Druckpackung nach Anspruch 13, **dadurch gekennzeichnet, dass** als Anschlagring (20) ein starrer Stützring (40, 43) vorgesehen ist, der niederdruckseitig axial am Dichtring (12) anliegt.

15. Druckpackung nach Anspruch 14, **dadurch gekennzeichnet, dass** radial zwischen axialer Schulter (16) und Stützring (40) ein elastischer Ring (41) angeordnet ist.

16. Druckpackung nach Anspruch 13, **dadurch gekennzeichnet, dass** als Anschlagring (20) ein elastischer Ring vorgesehen ist, der niederdruckseitig axial am Dichtring (12) anliegt.

17. Druckpackung nach Anspruch 11 oder 12, **dadurch gekennzeichnet, dass** die axiale Schulter (16) auf der dem hohen Druck (p₁) zugewandten Seite des Dichtringes (12) vorgesehen ist.

18. Druckpackung nach Anspruch 17, **dadurch gekennzeichnet, dass** als Anschlagring (20) der radial geschnittene Packungsring (30) vorgesehen ist.

19. Druckpackung nach Anspruch 17, **dadurch gekennzeichnet, dass** als Anschlagring (20) ein starrer Stützring, der hochruckseitig axial am Dichtring (12) anliegt, vorgesehen ist.

20. Abdichtung zur Abdichtung zwischen einem starren Bauteil, insbesondere einem Kompressorgehäuse, und einem beweglichen Bauteil, insbesondere einer Kolbenstange (5) eines Kompressors, mit einer Anzahl von axial nebeneinander angeordneten Druckpackungen, die jeweils in einem Packungsgehäuse angeordnet sind, wobei zumindest eine Druckpackung (26) nach einem der Ansprüche 11 bis 19 ausgeführt ist.
